# EUROPEAN PATENT APPLICATION

(11) **EP 2 390 165 A2**
(43) Date of publication of application: **30.11.2011**
(21) Application number: 11167069.1
(22) Date of filing: 23.05.2011
(51) Int. Cl.: B62D 21/04, B62D 21/06, B60P 1/54

(54) **Truck having a narrow chassis**

(30) Priority: 25.05.2010 NL 2004762
(71) Applicant: Lokhoff V.o.F, 5482 ZW Schijndel (NL)
(72) Inventor: Hessels, Antonius Adrianus Lambertus, 5292 NC, Gemonde (NL)
(74) Representative: Jansen, Cornelis Marinus

(57) **Abstract**

There is provided a truck for work on a relatively narrow road strip. The truck has a chassis (2) extending in the longitudinal direction of the truck, which is supported by axle bodies (3, 4, 5, 6). The chassis, at least adjacent at least one of the axle bodies (3), is formed by a pontoon construction (8, 9). The width (a) of the pontoon construction at least in the vicinity of an axle body (3, 4) carrying steered wheels (3a, 3b, 4a, 4b) is smaller than the width (b) of the remaining part of the pontoon construction.

## Description

A truck from US 3784035 has a loading crane which is arranged on the chassis by means of a bearing frame. The frame is disposed transversely of the longitudinal direction of the chassis and carries outrigger legs on opposite sides of the chassis which are movable between an inoperative position and an operative position, in which they provide for the required stability during work with the loading crane. The chassis includes two longitudinally extending I-beams which are mutually connected by transverse girders. The chassis is supported on a number of axle bodies which carry the wheels outside the chassis. With such a standard truck chassis it is necessary, in order to give the chassis sufficient stiffness, to start from a sufficient truck width, which, in practice, inclusive of the wheels, is at least 2.40 m overall. Due to this overall width, deployment of this known truck for work with the loading crane on a roadway requires the roadway or lane concerned to be closed. Given the current heavy traffic, such closure entails traffic inconvenience, or work has to be done in the night hours, which, in the absence of sufficient street lighting, requires temporary lighting to be set up especially for this work.

From EP 2098474 A2 it is known to arrange a crane on a pontoon construction (torque box). It is shown that this pontoon construction can be placed on a truck chassis to transport it. EP 2098474 A2 shows a standard truck chassis in which notches are provided in the longitudinal beams of the chassis to lower the height of the stacked construction of truck chassis plus pontoon construction. The above-mentioned prior art does not provide a solution for the design of a narrower truck which disposes of a high load bearing capacity and whose chassis is torsionally stiff.

The object of the invention is to provide a truck that is suitable for carrying out work on a relatively narrow road strip.
To this end, the invention is characterized in that the chassis, at least adjacent at least one of the axle bodies, is formed by a pontoon construction whose width, at least in the vicinity of an axle body carrying steered wheels, is smaller than the width of the higher part of the pontoon construction, such that at a minimum overall width the steered wheels can make sufficient steering deflection.

Through a local narrowing in the pontoon construction adjacent an axle body carrying steered wheels, enough room can be offered for the steering deflection of the wheels. The overall pontoon construction can be wider than this narrowing, so that the chassis can preserve a higher torsional stiffness. In contrast with EP 2098474 A2, in which a chassis is formed as a conventional beam chassis in which a pontoon construction is placed onto the chassis, in the present invention the chassis, at least adjacent the axle bodies, is *itself* formed by the pontoon construction. By constructing the chassis, at least adjacent the axle bodies, as a pontoon construction, the truck, at least adjacent at least one of the axle bodies and the outrigger legs, has a self-supporting chassis of sufficient stiffness. The pontoon construction makes it possible, with the wheels included, to keep the overall width of the truck limited, so that the truck according to the invention is deployable for work on a relatively narrow road strip. Thus, the truck can be deployed efficiently, and properly within regulations, for work with the crane configured as a loading crane on a hard shoulder, for example for repairing a crash barrier, putting up signs or erecting temporary lighting masts for work in the night hours, without the roadway needing to be closed. Also, the truck lends itself advantageously for work in a city street next to a streetcar rail, in which case the truck, besides the design with a loading crane, may also be designed as a sludge-gulper, whose crane is configured as a carrier of the suction hose.

It is of advantage if the chassis is formed by a pontoon construction at least adjacent all axle bodies. Between the axle bodies it is possible, for certain designs of the truck, to choose a different design of the chassis. Thus, the width of the truck, including the wheels present on the axle bodies, can be kept limited throughout the length thereof.

Further, it is of advantage if the chassis is formed by a pontoon construction over the whole distance from the front axle body to near the rear axle body. Thus, along the whole length between the axle bodies, the truck has a self-supporting chassis of sufficient stiffness.

Further, it is of advantage if the width of the pontoon construction at least substantially corresponds to the width of a differential gear present in an axle body, situated in the drive of the wheels connected with the respective axle body. By adapting the width to that of the differential gear, adjacent the driven axle body concerned a minimum overall width can be realized. The adapted width in an advantageous embodiment can be 45-50 cm, preferably 48 cm.

In connection with this, it is of advantage if the width of the pontoon construction is smaller at least in the vicinity of an axle body carrying steered wheels, such that at a minimum overall width the steered wheels can make sufficient steering deflection. This can be realized in an advantageous manner by giving the lower part of the pontoon construction adjacent this axle body a lesser width than an upper part. This lesser width, in an advantageous embodiment, can be 35-40 cm, preferably 36 cm.
A preferred embodiment of the invention is characterized in that the crane is arranged on a rotation ring which is connected with the pontoon construction. The self-supporting pontoon construction offers favorable possibilities for assembly and support of the rotation ring with the crane present thereon. Depending on the design and use of the truck, in an advantageous manner the rotation ring may be arranged on a bearing frame situated laterally of the pontoon construction and extend, in top plan view, to above the pontoon construction, thereby allowing long objects to be loaded and transported unhindered by the presence of the base of the crane. Alternatively, the rotation ring may be arranged on the top of the pontoon construction.

It is further of advantage if the chassis, in the vicinity of a rear axle body, has an end part adjoining the pontoon construction, this end part consisting of two approximately parallel running, mutually spaced bearing girders, which carry the driving motor. This provides an advantageous solution for the placement of the motor, since the pontoon construction at the front does not lend itself for suspension of a driving motor of somewhat heavier design. Moreover, by thus disposing the driving motor near the rear part of the truck, the dimensions of the cab relative to the remaining part of the truck, in particular the height, can remain limited. As a consequence, a cab which is disposed relatively low can be used, which is of advantage in transporting and hoisting long objects, such as lighting masts, with the crane.

When a lighter design of the truck is used, it may be of advantage if the pontoon construction carries the driving motor near a front axle body.

Alternatively, to include the driving motor at the front, the chassis may in the vicinity of a front axle body have an end part adjoining the pontoon construction, consisting of two approximately parallel running, mutually spaced bearing girders, which carry the driving motor.

In a preferred embodiment of the invention, the pontoon construction in cross section is so dimensioned that the load bearing capacity of the chassis at least substantially corresponds to that of a standard truck chassis. In this manner, the truck according to the invention is also feasible in a relatively heavy embodiment, so that the pontoon construction enables various applications of the truck. Thus, also in heavier designs, it is possible for the overall width of the truck to be 2 m at a maximum.

According to the invention, the truck with crane has a superstructure adapted to the functional requirements of the truck, and by virtue of the limited overall width the truck is deployable on a relatively narrow road strip, such as on a hard shoulder of a highway or in a city street next to a streetcar rail or for passing a narrow passage.

According to another aspect of the invention, in a truck having a chassis extending in the longitudinal direction of the truck, which is supported by axle bodies, the chassis, at least along a part of the length, is formed by a pontoon construction whose width, at least in the vicinity of an axle body carrying steered wheels, is smaller than the width of the remaining part of the pontoon construction, such that at a minimum overall width the steered wheels can make sufficient steering deflection.
Thus, the chassis may be designed with a pontoon construction of minimum width, sufficient stiffness and load bearing capacity and a good maneuverability. With this design, the truck according to the invention has a superstructure of a limited overall width, adapted to the functional requirements of the truck, so that the truck is deployable on a relatively narrow road strip, such as on a hard shoulder of a highway, in a city street next to a streetcar rail or for passing a narrow passage. In general, the invention in this embodiment lends itself for use in work vehicles, examples including road sweeping trucks, deployable for sweeping hard shoulders, mowing vehicles for mowing roadside verges, garbage trucks and container trucks for narrow city streets and passages.

In the exemplary embodiments hereinafter described and shown, to which, however, the invention is expressly not limited, the truck is designed for transporting and placing lighting masts with the loading crane. In the drawing:
Fig. 1 shows a side elevation of a truck according to the invention in a first embodiment,
Fig. 2 shows a top plan view of the chassis of the truck according to Fig. 1, in which also the axle bodies, a cardan shaft and the wheels are schematically represented,
Fig. 2A shows a cross section through the chassis according to the arrows IIA-IIA in Fig. 2,
Fig. 2B shows a cross section through the chassis according to the arrows IIB-IIB in Fig. 2,
Fig. 2C shows a cross section through two alternative embodiments of the chassis at the position of the cross section represented in Fig. 2B, and
Fig. 3 shows a side elevation of a truck according to the invention in a second embodiment.

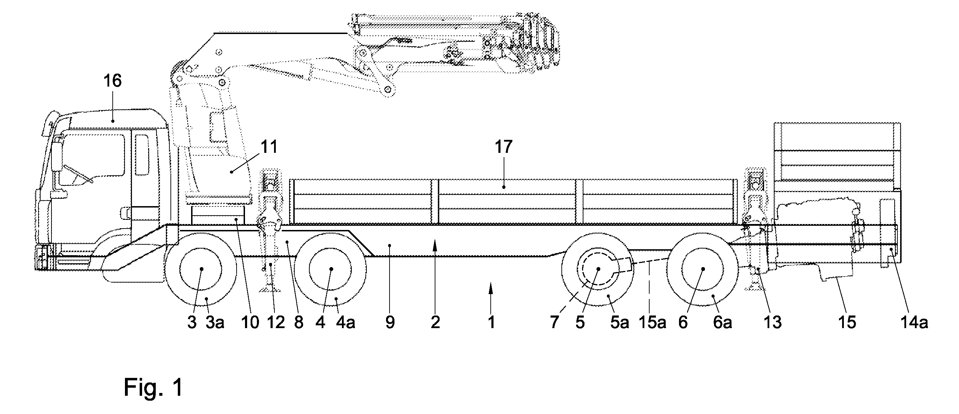

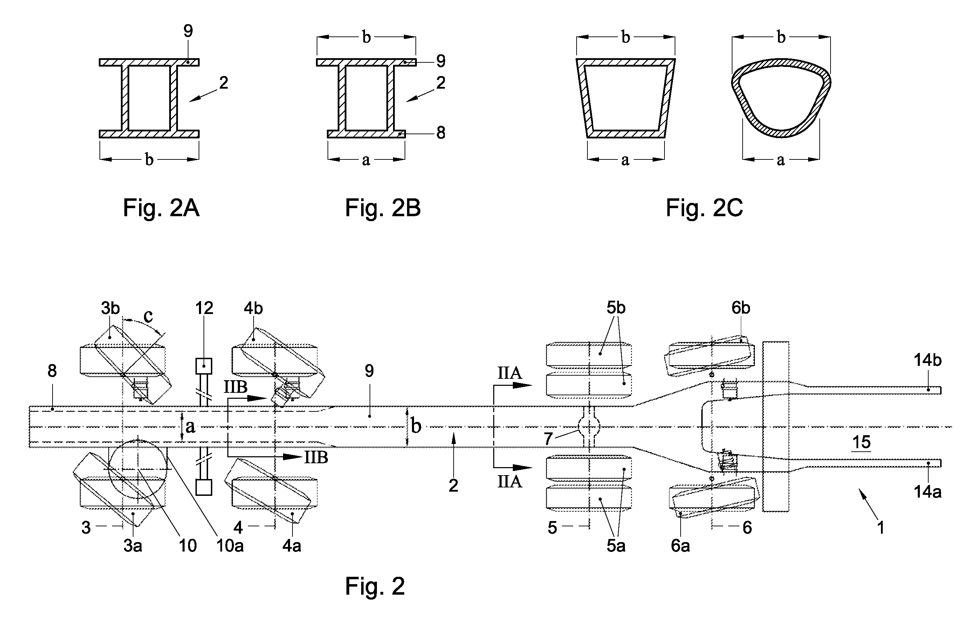

The parts of a truck 1 shown in Figs. 1 and 2 include a chassis 2 extending in the longitudinal direction of the truck, which is designed along the whole length or along a part of the length as a pontoon construction and which is supported by axle bodies 3, 4, 5 and 6, the axle bodies 3, 4 and 6 carrying steered wheels 3a, 3b, 4a, 4b and 6a, 6b, respectively, disposed laterally of the chassis, while the axle body 5 is designed as a shaft driven by a differential gear 7 which drives wheel pairs 5a, 5b. Within the framework of the invention, "pontoon construction" is understood to mean an elongate, load bearing, torsionally stiff construction body which is closed over at least a major part thereof. In a preferred embodiment this body has a box-shaped design (see Figs. 2A and 2B). The chassis 2 with the pontoon construction, of rectangular design with extending parts 8 and 9 as represented in Figs. 1, 2, 2A and 2B, has a width a over a lower-located part 8, that is smaller than the width b of a higher part 9, such that at a minimum overall width a the steered wheels 3a, 3b, 4a, 4b can make a sufficient maximum steering deflection through an angle c. With a maximum angle c of such magnitude, the truck, despite the pontoon construction, allows maneuvering like a comparable standard truck. Alternative trapezoidal and rounded-triangular configurations of the pontoon construction in the vicinity of the steered wheels 3a, 3b, 4a, 4b are respectively represented in the two cross sections shown in Fig. 2C. This lesser width a in an advantageous embodiment can be 35-40 cm, preferably 36 cm, while the width b in an advantageous embodiment can be 45-50 cm, preferably 48 cm. The width b corresponds at least substantially to the width of the differential gear 7.

In an advantageous embodiment, the pontoon construction is narrower at the underside, where the wheel deflection takes place, than at the top, having, for instance, a shorter flange as shown in Fig. 2B and/or being tapered as shown in Fig. 2C. In a further advantageous embodiment, the width a at the underside is narrower than the width b at the top by 5-25 cm, preferably 16 cm. In a further advantageous embodiment, the width a is narrower than the width b by 10-30%, preferably 25%.

Near the axle body 3, the pontoon construction carries on one side a rotation ring 10, for which a bearing frame 10a is present, situated laterally of the pontoon construction. In top plan view according to Fig. 2, the rotation ring 10 extends to above the pontoon construction. Present on the rotation ring 10 is a hydraulically operated loading crane 11. Between the axle bodies 3 and 4, outrigger legs 12 are supported directly on the chassis. Additionally, as represented in Fig. 1, outrigger legs 13 may be supported on the chassis near the rear axle body 6 as well.
These outrigger legs 12 and 13 can be swung out in width and height direction from the inoperative position shown to an operative position, not shown, and in this position give the truck the required stability during work with the loading crane 11.

The chassis 2 in the vicinity of the rear axle body 6 has an end part, consisting of two approximately parallel running, mutually spaced bearing girders 14a, 14b, which carry a driving motor 15 which is coupled to the differential gear 7 through a schematically represented cardan shaft 15a.

Owing to the driving motor being arranged at the rear, a cab 16 of relatively low design can be arranged on the chassis 2, which is of advantage in transporting long objects and hoisting these with the loading crane 11. For loading, transporting and unloading such objects, the truck 1 has a functionally determined superstructure 17, which is represented only schematically.

In the embodiment shown of the truck according to the invention the chassis has a self-supporting pontoon construction over the whole distance from a point forward of the front axle body 3 to a point rearward of the rear axle body 6. Depending on the functional requirements, it may suffice, in a manner not represented, to provide a pontoon construction at least adjacent the axle body 3 where the rotation ring 10 and the crane 11 and the outrigger legs 12 are supported, or adjacent all axle bodies 3, 4, 5 and 6, respectively. It is of importance here that despite the limited width, the pontoon construction in cross section is so dimensioned that the load bearing capacity and stiffness of the chassis corresponds at least substantially to that of a standard truck chassis.

The rotation ring 10, instead of being arranged on a side, may also, for example for applications where no long objects need to be loaded, be arranged (not shown) near the axle body 3 on the top of the pontoon construction.

By virtue of the advantageous manner of construction of the chassis in the form of a pontoon construction, the truck 1 according to the invention in heavier designs of 15-20 tons, too, has an overall width that can remain limited to 2.00 m at a maximum. This renders the truck deployable with great advantage on a relatively narrow road strip, such as on a hard shoulder of a highway or in a city street next to a streetcar rail.

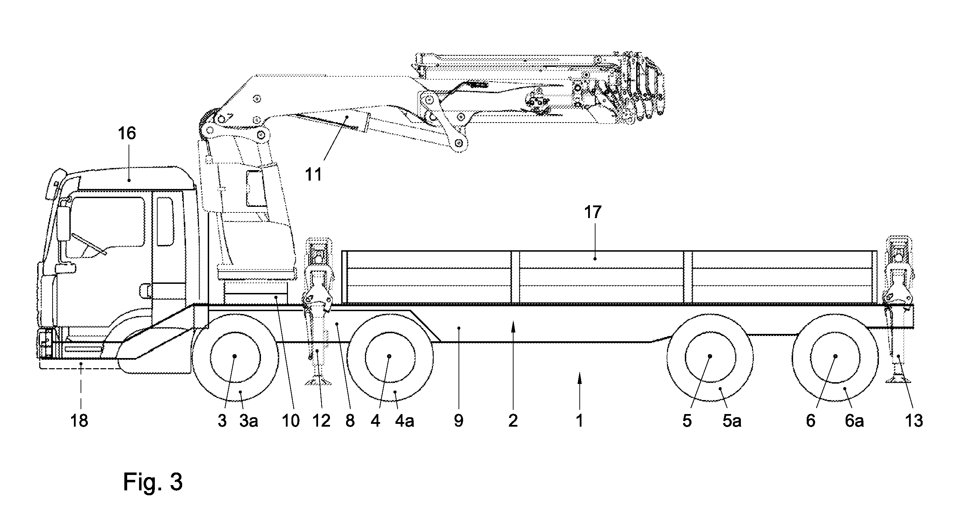

The truck 1 in a second embodiment shown in Fig. 3 has many parts corresponding to the first embodiment, which are designated with the same reference numerals. This applies in particular to the design of the chassis 2 in the form of a pontoon construction and the above-described details regarding the manner of arranging the loading crane 11 and the outrigger legs 12 and 13. An essential difference is that in the second embodiment a relatively lighter driving motor 18 is included under the floor of the cab 16 and from thence is coupled through a cardan shaft to the differential gear 7.

The truck 1, besides being designed, as shown, in the form of a truck for transporting lighting masts and placing them with the loading crane, may also be designed, while preserving the above-mentioned advantages, as, for example, a sludge gulper, with the crane configured as carrier of the suction hose.
The feature that the width (a) of the pontoon construction in the vicinity of the axle body (3, 4) carrying the steered wheels (3a, 3b, 4a, 4b) is smaller than the width (b) of the higher part of the pontoon construction gives the pontoon construction, with a minimum width, sufficient stiffness and load bearing capacity, a favorable steering deflection and hence a good maneuverability. As a result, the truck according to the invention generally lends itself for uses with a superstructure of a limited overall width, adapted to the functional requirements of the truck, so that it is deployable on a relatively narrow road strip. To be generally designated as relatively narrow work vehicles. Further examples of such work vehicles are garbage trucks with a crane capable of lifting a garbage container, moving vans with a ladder and/or lift capable of lifting a load, sludge gulpers where the crane is configured as carrier of the suction hose, road sweeping trucks for sweeping the hard shoulder, and so forth. In short, all sorts of trucks and load vehicles which perform work on a relatively narrow road strip which may involve high torque on the chassis. Generally, the invention is suitable for any situation where it is advantageous to provide a relatively narrow vehicle (narrower than 2.4 m, preferably 2 m at a maximum) with a chassis that is resistant to relatively high torque.

The invention is not limited to the embodiments shown and described, but also extends to variants thereof.

## Claims

1. A truck for work on a relatively narrow road strip, the truck comprising a chassis (2) extending in the longitudinal direction of the truck, which is supported by axle bodies (3, 4, 5, 6), **characterized in that** the chassis (2) at least along a part of the length is formed by a pontoon construction whose width (a), at least in the vicinity of an axle body (3, 4) carrying steered wheels (3a, 3b, 4a, 4b), is smaller than the width (b) of the higher part of the pontoon construction, such that at a minimum overall width the steered wheels can make sufficient steering deflection.

2. A truck according to any one of the preceding claims, **characterized in that** the overall width of the truck is 2 meters at a maximum.

3. A truck according to any one of the preceding claims, **characterized in that** the chassis (2) carries outrigger legs (12) which, at least adjacent at least one of the axle bodies (3, 4, 5, 6), are supported directly by the chassis (2).

4. A truck according to any one of the preceding claims, **characterized in that** the chassis (2), at least adjacent at least one of the axle bodies (3), is formed by a pontoon construction (8, 9) carrying the crane (11).

5. A truck according to claim 4, **characterized in that** the crane (11) is arranged on a rotation ring (10) which is connected with the pontoon construction.

6. A truck according to claim 5, **characterized in that** the rotation ring (10) is arranged on a bearing frame situated laterally of the pontoon construction and in top plan view extends to above the pontoon construction.

7. A truck according to claim 5, **characterized in that** the rotation ring (10) is arranged on the top of the pontoon construction.

8. A truck according to any one of claims 5-7, **characterized in that** the rotation ring (10) is connected with the pontoon construction in the vicinity of an axle body (3).

9. A truck according to any one of the preceding claims, **characterized in that** the chassis (2) is formed by a pontoon construction at least adjacent all axle bodies (3, 4, 5,6).

10. A truck according to any one of the preceding claims, **characterized in that** the chassis (2) over the whole distance from the front (3) to near a rear (5, 6) axle body is formed by a pontoon construction.

11. A truck according to any one of the preceding claims, **characterized in that** the width (b) of the pontoon construction corresponds at least substantially to the width of a differential gear (7) present in an axle body (5), situated in the drive of the wheels (5a, 5b) connected with the respective axle body.

12. A truck according to any one of the preceding claims, **characterized in that** the chassis (2) in the vicinity of a rear axle body (6) has an end part adjoining the pontoon construction, consisting of two approximately parallel running, mutually spaced bearing girders (14a, 14b), which carry the driving motor (15).

13. A truck according to any one of claims 1-11, **characterized in that** the pontoon construction carries the driving motor (18) near a front axle body (3).

14. A truck according to any one of claims 1-11, **characterized in that** the chassis (2) in the vicinity of a front axle body (6) has an end part adjoining the pontoon construction, consisting of two approximately parallel running, mutually spaced bearing girders (14a, 14b), which carry the driving motor (15).

15. A truck according to any one of the preceding claims, **characterized in that** the pontoon construction in cross section is so dimensioned that the load bearing capacity of the chassis (2) at least substantially corresponds to that of a standard truck chassis.

16. A truck according to any one of the preceding claims, **characterized in that** the truck (1) has a superstructure, adapted to the functional requirements of the truck, and owing to the limited overall width is deployable on a relatively narrow road strip, such as on a hard shoulder of a highway or in a city street next to a streetcar rail.
